# EUROPEAN PATENT SPECIFICATION

(11) **EP 2 945 282 B1**
(45) Date of publication and mention of the grant of the patent: **04.07.2018**
(21) Application number: 15167385.2
(22) Date of filing: 12.05.2015
(51) Int. Cl.: H02S 20/23, F24J 2/00, F24J 2/04

(54) **ROOF PANEL AND ROOF PROVIDED WITH SUCH A ROOF PANEL**
DACHPLATTE UND DACH MIT SOLCH EINER DACHPLATTE
PANNEAU DE TOIT ET TOIT MUNI D'UN TEL PANNEAU DE TOIT

(30) Priority: 12.05.2014 NL 2012801
(43) Date of publication of application: 18.11.2015
(73) Proprietor: Stafier Holland B.V., 6902 PC Zevenaar (NL)
(72) Inventor: Harthoorn, Adrianus Johannes, 6902 PC Zevenaar (NL)
(74) Representative: Algemeen Octrooi- en Merkenbureau B.V.

(56) References cited:
- EP-A1- 0 857 926
- EP-A2- 1 447 852
- AT-A4- 508 902
- DE-A1-102007 020 151
- US-A1- 2003 154 666

## Description

According to a first aspect, the present invention relates to a roof panel having an at least substantially rectangular peripheral form with a longitudinal direction and a transverse direction, the roof panel comprising a solar panel and a plate element extending under and at a distance from the solar panel which are attached to each other by means of attaching means before the roof panel is arranged in assembled state, so with mutually attached solar panel and plate element, on a roof.

Such roof panels are known as PV panels and are applied for the purpose of generating electrical energy from captured solar radiation. The roof panels are arranged in use on a roof either in scaled manner instead of with individual roof tiles (or a horizontal row of two or more roof tiles adjacently of each other), or extending as a surface on a separate construction at a distance above a tiled roof. In the first case the roof panel can be watertight when it also fulfills this function of roof tiles. The roof panel must in that case also connect watertightly to adjacent roof tiles or roof panels. The roof panel then extends at the same angle of inclination as a roof tile, or two or more mutually adjacent roof tiles, which would have been located at the relevant place in the roof. That is, the panels lie in scaled manner overlapping each other to be able to guarantee a good rainwater drainage of precipitation falling onto the roof. In the case where a solar panel is arranged above a tiled roof, roof tiles remain present under the panel and the roof panel need not take over any function of the roof tiles. The panels do not then have to be arranged in scaled manner on a roof. Because a plate element or tray extends at a distance from and under a solar panel, a ventilation space is formed under a solar panel which can bring about cooling of the solar panel, whereby the efficiency of the solar panel will improve.

A drawback of the known panels is that they are not suitable for rapid arrangement on an existing roof. When incorporated in a tiled roof, a reliable watertight construction has to be arranged in order to then arrange on the roof relatively small solar panels, the length of which as seen in the direction of the slope of the roof corresponds to that of a single roof tile. In the case of placing above a tiled roof, a construction to which the roof panels can be attached must first be arranged in the roof.

The present invention has for its object to provide a roof panel according to the introduction with which a roof can be provided with solar panels more quickly and/or more reliably than with the known roof panels without the necessity of providing or retaining a tiled roof (part) under the panels. This object is achieved according to the present invention with a roof panel according to claim 1. The distance of at least 60 cm is related to the length of conventional roof tiles (± 35 cm pitch is usual) and indicates that the roof panel extends over a distance of at least two roof tiles. The angle other than 0 degrees can be configured and chosen to make it possible for two or more roof panels to be arranged with the plate elements in scaled manner, or overlapping, and the solar panels in one plane. The scaled positioning of two plate elements lying one above the other results in a difference in height, referred to here as height step, between the upper edge of the lower plate element and the lower edge of the upper plate element. This height step is bridged by the associated solar panel along the whole length of the solar panel such that the lower edge of the upper solar panel lies in the same plane as the upper edge of the lower solar panel. Because the plate elements are oriented overlapping relative to each other in use on a roof, a watertight construction can hereby be realized, at least when the plate elements as in a preferred embodiment according to the present invention are per se watertight.

This is particularly advantageous when a solar panel extends over a length of two or more roof tiles. When a roof panel has a length corresponding to the length of a roof tile, the panel could after all be arranged in scaled manner such that the height step corresponds to that between two roof tiles lying one above the other. This is of course not possible in the case of a longer roof panel. It is precisely when large roof panels can be made, of for instance three roof tile lengths and four roof tile widths, that such panels can be used to provide a roof with solar panels relatively more quickly and/or more reliably without the necessity of providing roof tiles thereunder. The watertight plate element under the solar panel makes it possible to realize a watertight roof construction with roof panels according to the invention, at least for the roof part covered with such roof panels. An at least substantially watertight plate element is understood in this document to mean that the plate element, at least in the situation mounted on a roof, does not allow passage of water therethrough. Water can however optionally run off over a peripheral edge of the plate element. When the plate element is provided on one or more peripheral edges with an upright wall or a profile, such a wall or profile can then optionally allow passage of water therethrough. Sufficient alternative sealing options are known to the skilled person from which to make a suitable choice in order to attach the watertight plate elements watertightly to each other and optionally to adjacent roof tiles. Holes can be provided in the plate element for direct attachment of the plate element to a roof construction, such as a tiling batten. Different options are here also known to the skilled person for the purpose of realizing such a hole in watertight manner following attachment. Because the plate element does not extend parallel to, but at an angle relative to the solar panel, it is possible to have the plate elements of panels lying one above another overlap each other in scaled manner while the solar panels lying thereover can extend in one plane. It is hereby also possible to provide a roof panel which extends over a length, again as seen in the direction of the slope of the roof, which is greater than the length of one roof tile, wherein the length preferably substantially corresponds to the length of a specific number of roof tiles. Unless expressly stated otherwise, directions and orientations are always related in this document to a roof panel lying on a sloping roof, wherein the edge directed toward the roof ridge is designated as upper edge and the edge directed toward the roof gutter as lower edge. While in the case of the roof panel the plate element and the solar panel extend at an incline, a solar panel is then still situated (obliquely) above the plate element. The direction of the slope of the roof is seen as the longitudinal direction for a panel lying on a roof. It will further be apparent that the term plate element may be broadly interpreted and thus comprises profiled plates. Such a plate element is also referred to as a "tray" because rainwater is collected therein and the upper edge and the longitudinal edges have an upright edge. A profile can otherwise also be arranged for the purpose of strengthening the plate element in that the profile imparts better structural properties to the plate element.

In a preferred embodiment the solar panel and the plate element extend converging relative to each other, at least in the position of use of a solar panel arranged on a roof. Hereby realized is that water running over a plate element to a plate element of a lower further roof panel can always run downward unobstructed. With a diverging orientation water on its way downward would always come up against a step upward at a transition to a plate element of a lower roof panel, whereby water could be left behind there in the plate element.

Roof panels are known with a solar panel and a plate element extending at an angle other than 0 degrees relative to the solar panel, such as for instance disclosed in EP 1 447 852 A1, although such roof panels comprise a surrounding strip, whereby solar panels lying one above another cannot be oriented extending in one plane, or at least not such that the plate elements extend overlapping watertightly relative to each other. Additional auxiliary means are thus required in the case of such known roof panels, also referred to as OEM roof panels, in order to make a roof constructed with such roof panels watertight.

In a preferred embodiment according to the present invention a spacer is provided on or close to the upper and/or the lower edge of the roof panel which is configured in use to hold spaced apart the upper edge of the plate element of a lower roof panel and the lower edge of a roof panel located thereabove. The spacer can be a separate element but also form an integral part of a plate element. The mutual distance between the upper edge of the plate element of the lower roof panel and the bottom edge of a roof panel located thereabove is defined by applying a spacer. It is thus easily possible to ensure, by means of such a spacer element in combination with a determined adjustment angle, that the associated solar panels extend in one plane. The spacer can provide the function of barrier devices for the purpose of preventing water from being able to flow back between the upper edge of the lower roof panel and the lower edge of the roof panel located thereabove, whereby leakage could occur. The spacer is preferably configured to create a mutual spacing of at least 1 cm between and at the position of two mutually overlapping plate elements.

It is recommended here that the angle at which the solar panel and the plate element extend relative to each other corresponds to the distance which the spacer creates in use between two plate elements lying one above the other. This simplifies installation of the roof panels with aligned solar panels on a substantially flat surface such as a tiling batten construction of a tiled roof.

In a preferred embodiment according to the present invention the plate element has an angle on or close to the lower edge so that the plate element extends there at least over a distance in a direction away from the solar panel and/or has an angle on or close to the upper edge so that the plate element extends there at least over a distance in a direction toward the solar panel. Such a construction is easy to realize, for instance by folding the plate of the plate element. A respectively upward rising and downward hanging edge can in this way be provided in simple manner over the whole width of the plate element and function both as spacer and barrier edge.

The plate element can be provided on one longitudinal side with a first longitudinal profile and provided on the other longitudinal side with a second longitudinal profile, wherein an at least substantially watertight seal is realized when the first longitudinal profile engages on a second longitudinal profile of a plate element of an adjacent roof panel and/or when the first longitudinal profile and the second longitudinal profile overlap each other. The first and the second longitudinal profile can be identical (optionally mirrored along a central longitudinal axis of the roof panel), though this is not essential. Because a solar panel and an associated plate element do not extend wholly parallel to each other, the orientation of a roof panel according to the present invention is fixed and the roof panel cannot be provided "upside down" on a roof.

For a rapid assembly on a roof it is recommended that the roof panel comprises on or close to the upper edge and/or the lower edge quick release coupling means which are configured for quick coupling and optional uncoupling of two roof panels lying one above the other. Such a measure can optionally also be provided in the case of a roof panel according to the present invention (claim 1), wherein the measure that at least in the mutually attached situation the solar panel and the plate element extend in the longitudinal direction at an adjustment angle other than 0 degrees relative to each other, in other words a panel which differs from a panel according to the present invention in that the plate element and the solar panel extend parallel to each other.

It is recommended that the quick release coupling means for mutually coupling the roof panel to a roof panel lying thereunder and/or thereabove form an integral part of the attaching means with which the solar panel and the plate element are attached to each other. The number of components from which a roof panel is assembled can hereby be kept low.

It is recommended that at an outer end at which a quick release coupling means is situated an attaching means extends beyond the solar panel and optionally the plate element. The quick release coupling means can thus be coupled relatively easily to counter-coupling means of a further roof panel for coupling.

It is recommended that the attaching means comprise releasable attaching means so that a roof panel can be arranged in two steps on a roof, i.e. fixing the plate element of the roof panel to the roof and attaching the solar panel to the plate element. Releasable attaching means are thus not so much understood to mean that the attaching means are releasable from the solar panel as well as from the plate element. Releasable attaching means are understood here to mean that an attachment realized with the attaching means concerned is releasable.

A roof panel according to the present invention preferably has a length of at least 80 cm, more preferably 100 cm and still more preferably 125 cm. The roof panel further has a width of preferably 50 cm, more preferably 60 cm and still more preferably 75 cm. The larger the panels, the fewer the roof panels required to cover a roof of a determined size and the more quickly a roof can be covered.

According to a second aspect, the present invention relates to a roof provided with roof panels comprising a solar panel. The present invention has for its object to provide such a roof or to provide a method for mounting roof panels on a roof construction with which a watertight roof construction can be realized relatively quickly and reliably. This object is achieved according to the present invention by means of a roof provided with a watertight plate element and roof panels comprising a solar panel, wherein a plate element of a higher roof panel partially overlaps a plate element of a roof panel lying directly thereunder and the overlapping part of the higher plate element extends at a distance from and above the overlapped part of the lower plate element, and wherein the solar panels of the associated roof panels lie against each other or have some distance relative to each other and extend at least substantially in one plane. Owing to the overlapping orientation of the plate elements it is easy to provide a rainwater drainage in reliable manner. For an improved watertightness barrier means can be provided for stopping water which, for instance as a result of wind, creeps upward over a plate element of a roof panel and thus, in the absence of the barrier means, could flow over the part of the lower plate element overlapped by the upper plate element.

It is recommended here that the roof is provided with roof panels according to the first aspect of the present invention. Such roof panels are configured to provide a roof with "scaled" plate elements and solar panels lying in one plane.

In a preferred embodiment according to the present invention fixing holes are provided in the plate element of a roof panel, wherein the roof panel is fixed to the roof by means of fixing means inserted through such a hole. The holes can be provided here at mutual distances corresponding to the mutual distance between two tiling battens extending horizontally on a roof construction. These can be two adjacent tiling battens, although it is possible for one or more other tiling battens to be situated between these tiling battens.

It is recommended here that sealing means are provided with which the fixing holes are sealed watertightly. Sufficient options are known to the skilled person for providing a watertight attachment, such as rubber rings provided during attachment between a plate element and a fixing means, for instance the head of a screw, or the roof construction, for instance a tiling batten.

In a preferred embodiment according to the present invention mutually adjacent roof panels are attached in watertight manner relative to each other. The watertightness can be provided by a specific shape of sides of the adjacent roof panels, for instance of adjacent plate elements. Alternatively or furthermore, sealing elements such as for instance rubber sealing can be provided on or close to a longitudinal edge of a roof panel.

It is recommended here that plate elements of two mutually adjacent roof panels overlap each other at the longitudinal edges.

The present invention will be further elucidated hereinbelow with reference to an exemplary embodiment of a roof panel and a roof provided with roof panels according to the present invention as shown in the accompanying figures, in which:
- Figure 1: is a perspective top view of a roof panel, wherein parts of the solar panel are cut away;
- Figure 2A: shows the detail IIA of figure 1;
- Figure 2B: shows the detail IIB of figure 1;
- Figure 3: is a vertical longitudinal sectional view of the roof panel;
- Figure 4: is a vertical longitudinal sectional view of connecting roof panels;
- Figure 5: is a vertical cross-sectional view of a roof panel;
- Figure 6A: is a vertical cross-sectional view of adjacent panels;
- Figure 6B: shows the detail VIB of figure 6A;
- Figure 7A: is a vertical cross-sectional view of adjacent panels with adjustable overlap of the longitudinal profiles;
- Figure 7B: shows the detail VIIB of figure 7A;
- Figure 7C: shows the detail VIIC of figure 7A;
- Figure 8A: is a vertical cross-sectional view of two adjacent panels provided with a further exemplary embodiment of a longitudinal profile;
- Figure 8B: shows the detail VIIIB of figure 8A;
- Figure 9A: is a perspective view of a detail of two plate elements with omega profiles;
- Figure 9B: is a perspective view of a detail of two mutually connected plate elements;

- Figure 10: is a perspective view of a matrix of roof panels on a roof.

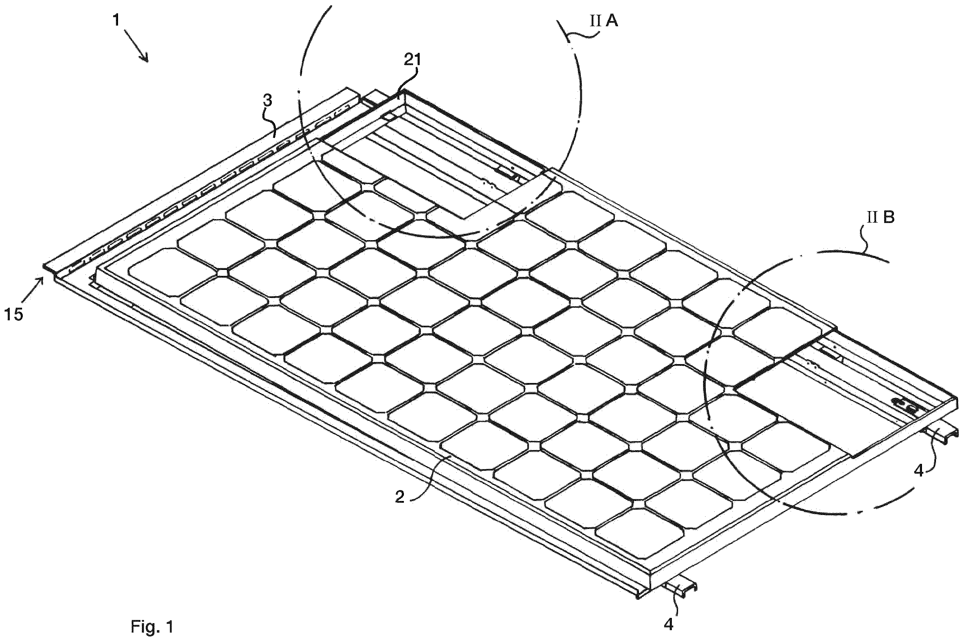

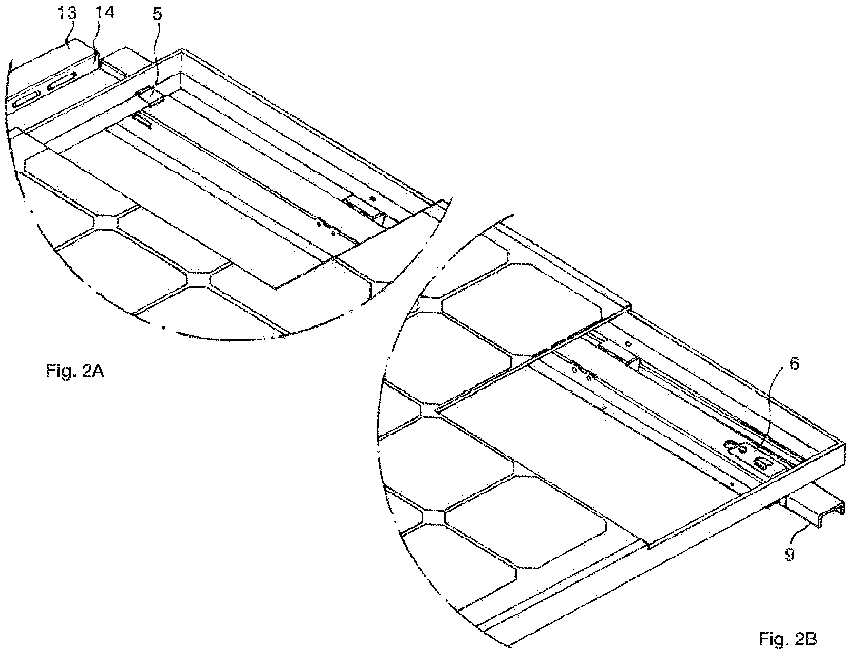

Shown in figure 1 is a roof panel 1 comprising a solar panel 2 and a plate element 3. The solar panel 2 and the plate element 3 are attached to each other by means of omega profiles 4. This attachment is shown in detail in figure 2A and figure 2B. Shown in figure 2A is that the solar panel 2 is connected by means of a fastening lip 5 to the omega profile 4. The fastening lip 5 is formed by a part pressed out of the omega profile 4. Shown in figure 2B is the attaching strip 6 with which the solar panel 2 is fixed with the frame 21 to the omega profile 4. The attaching strip 6 is connected slidably to the omega profile 4. Because the attaching strip 6 is connected slidably to the omega profile 4, it is possible after realizing a connection using the fastening lip 5 to easily fix the opposite side of the solar panel 2 to the omega profile 4. Such an attachment is realized before the roof panel 1 is attached to a roof in order to enable rapid covering of a roof. The difference in height between the upper part and the lower part of the omega profile does in fact correspond to the height of an upright edge 14 of the plate element 3.

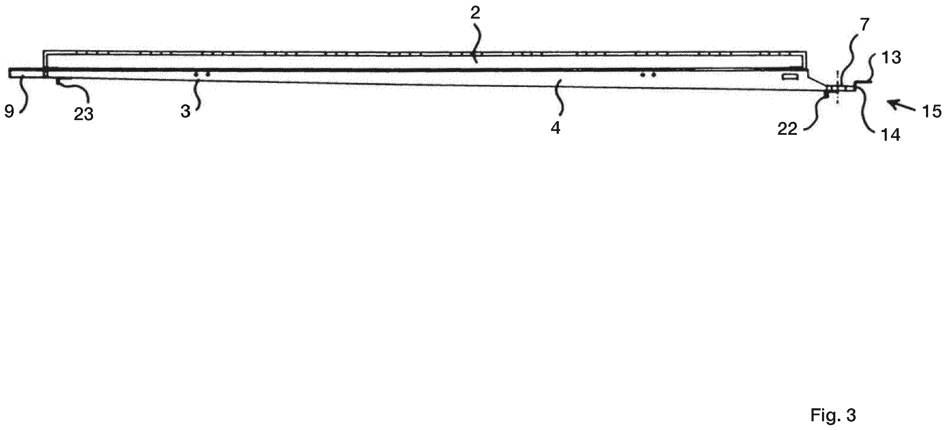

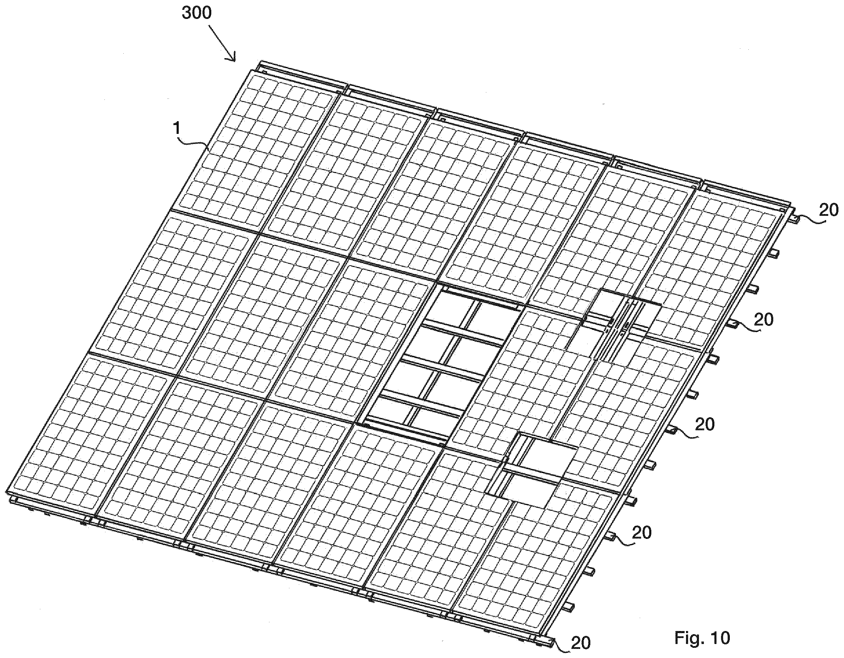

Figure 3 shows that the omega profile 4 attaches the plate element 3 and the solar panel 2 at an acute angle to each other. The plate element 3 is provided on the upper edge 13 with a spacer 15. This spacer 15 is formed by an upright edge 14 and the upper edge 13 which is provided on the roof panel 1 in order to provide ventilation to the space between the solar panel 2 and the plate element and between the roof panel and an underlying roof construction, as will be elucidated later in this document. The mounting opening 7 is provided for the purpose of fixing the plate element 3 to an underlying roof construction, for instance a tiling batten (not shown). A hook element 22 and a locking element 23 are formed on the underside of the omega profile 4. During mounting of the roof panel the hook element 22 is hooked onto the tiling batten 20 shown in figure 10. The locking element 23 realizes a locking of two omega profiles 4 attached to each other.

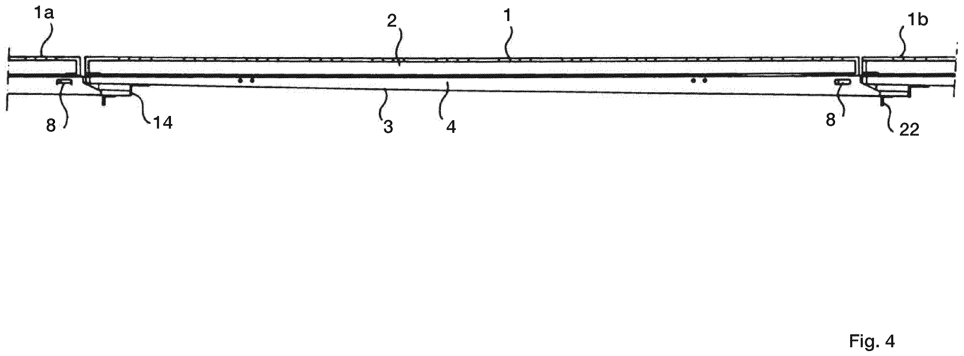

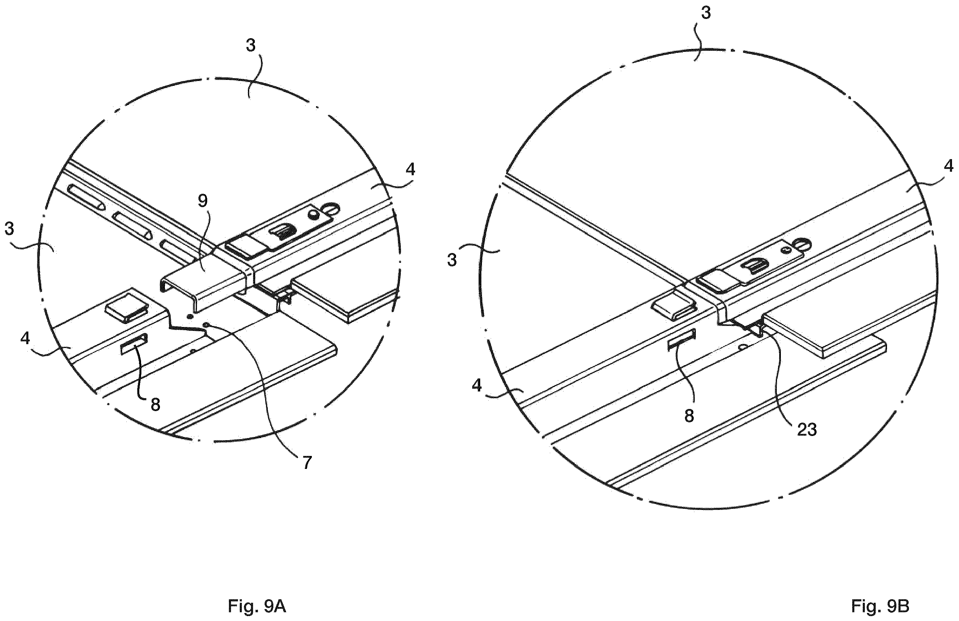

Figure 4 is a vertical longitudinal sectional view of a roof panel 1 with further roof panels 1a, 1b on the upper and lower sides, wherein the omega profiles 4 of the respective roof panels 1 and 1a and 1b, 1 are attached to each other. The realizing of this attachment is further shown in figure 9A and figure 9B. It can be seen in figure 4 that the coupled roof panels overlap each other in the manner of roof tiles, wherein the upright edge 14 "lifts" the plate element lying above. This difference in height is cancelled out for the solar panel 2 because the omega profile 4 narrows downward from the top.

Figure 9A shows two plate elements 3 and two omega profiles 4 of roof panels 1 for placing one above the other before attachment of the roof panels 1 has taken place using the omega profiles 4. For the purpose of the mutual attachment of the omega profiles 4 of the adjacent roof panels 1 the omega profile 4 of the roof panel 1 lying on the upper side is provided with a narrowed free outer end 9. The mutual attachment takes place by arranging the free outer end 9 of the omega profile 4 of a roof panel 1 in the omega profile 4 of the other roof panel 1 as shown in figure 9B. The free outer end 9 is guided in the omega profile 4 of the other roof panel 1 using guide strips 8. These guide strips 8 are formed by a part pressed out of the omega profile 4. The distance between the guide strip 8 and the inner wall 24 of the omega profile 4 substantially corresponds to the height of the free outer end 9.

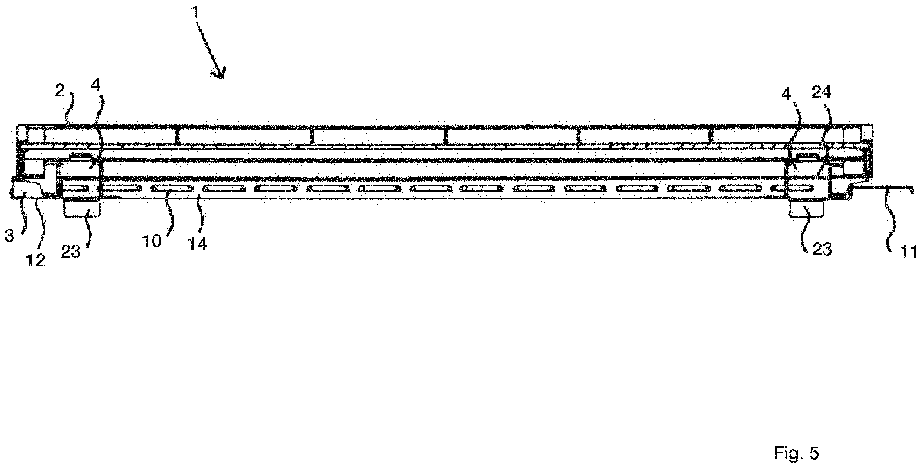

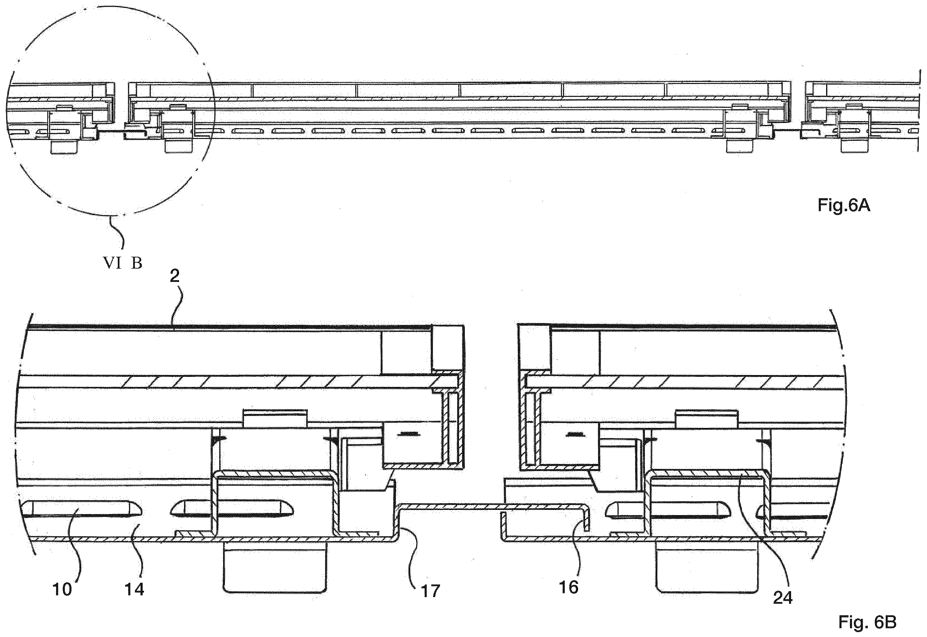

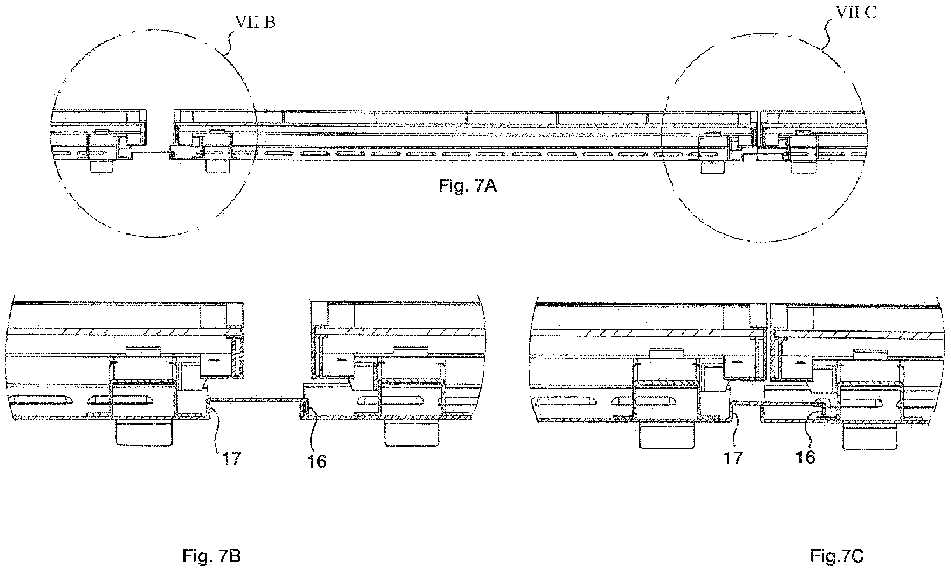

Figure 5 is a vertical cross-sectional view of the roof panel 1 with ventilation openings 10, also referred to as louvres, in the upright edge 14 for the purpose of ventilating the spaces between the solar panel 2 and the plate element 3 and between the plate element 3 and a roof construction situated thereunder. The space between the solar panel 2 and the plate element 3 as well as the space between the plate element 3 and the roof construction are ventilated in order to prevent condensation and to cool the solar panel 1 for the purpose of higher efficiency. Further shown in figure 5 are the first longitudinal profile 11 and the second longitudinal profile 12. These longitudinal profiles 11, 12 are formed in the shape of a U-profile so that they overlap each other as shown in figure 6B when roof panels are placed adjacently of each other. The first longitudinal profile 11 has an outlying leg 16 which takes a shorter form than the leg 17 adjacent to a plate portion. The degree of overlap of the longitudinal profiles 11 and 12 can thus be adjusted in continuously variable manner by sliding the outer leg of the first longitudinal profile 11 between the two legs of the U-shaped second longitudinal profile 12. The minimum overlap is shown in figure 7B. Figure 7C shows a relatively great overlap, whereby in this case the solar panels 2 are substantially in contact. The maximum overlap results when the leg 16 lies against the omega profile 4 of the adjacent roof panel 1 or when the solar panels 2 make contact with each other before the leg 16 touches the omega profile 4 due to the mutual distance of adjacent solar panels 2.

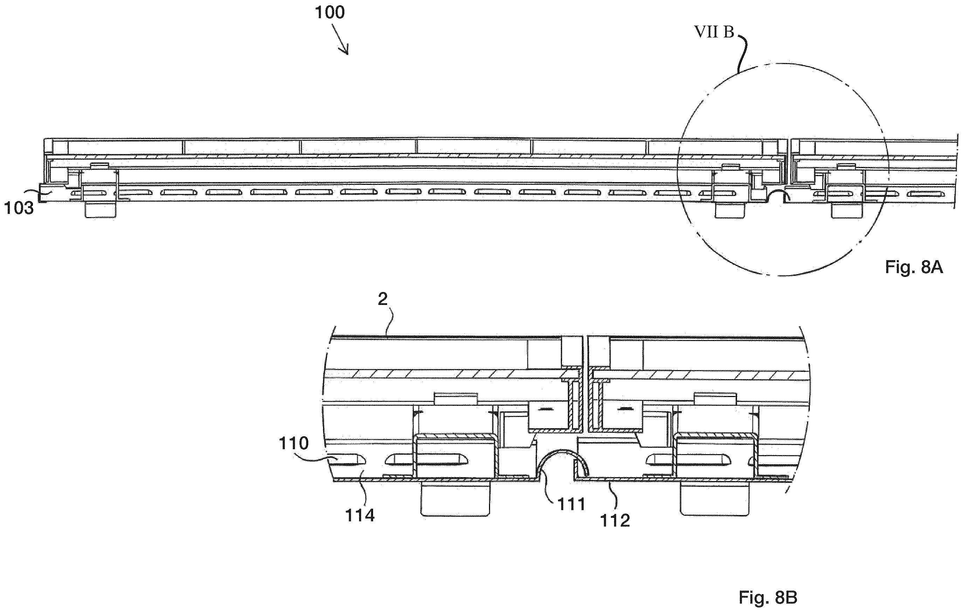

An alternative embodiment of a roof panel 100 shown in figures 8A and 8B has a first curved longitudinal profile 111. Other shapes of longitudinal profile can however also be envisaged. It is further possible to envisage at least one of the longitudinal profiles being embodied in assembled, optionally releasable parts. This can be in the form of a strip which is fixed to or can be snapped onto a side of a plate element. The width of the overlap could then be adjusted, for instance by making strips available in differing widths.

Figure 10 shows a roof 300 provided with roof panels 1, wherein the roof panels 1 are provided in a matrix and attached to tiling battens 20. The roof panels 1 cover the full width of the roof 300. For this purpose the width of the roof 300 for covering is first determined. The measured width is then divided by the width of the plate element 3. The integer value of the outcome of the above division is subsequently determined and the remainder value of the division then determined. An adjustment value is then calculated using the remainder value and the integer value. This adjustment value is then applied for the purpose of determining the overlap of the first longitudinal profile 11 and second longitudinal profile 12 of adjacent roof panels 1 by decreasing the maximum overlap of the two longitudinal profiles by the adjustment value. Finally, the roof panels 1 are arranged with the determined overlap on the roof 300. Because of the design of the roof panel according to the present invention a roof can be covered quickly.

The present invention has been elucidated in the figures and in the above description thereof on the basis of only a few embodiments. Many variations, which may or may not be obvious to the skilled person, can be envisaged within the scope of protection of the present invention which is defined in the following claims.

## Claims

1. A roof panel (1) having an at least substantially rectangular peripheral form with a longitudinal direction and a transverse direction, the roof panel comprising a solar panel (2), an at least substantially watertight plate element (3) extending under and at a distance from the solar panel and attaching means by means of which the solar panel and the plate element are attached or at least attachable to each other, wherein at least in the mutually attached situation the solar panel and the plate element extend parallel to each other in the transverse direction and extend in the longitudinal direction over a distance of at least 60 cm at an adjustment angle other than 0 degrees relative to each other, **characterized in that** said solar panel and said plate element are attached to each other by means of an omega profile (4), and **in that** said plate element (3) comprises an upright edge (14) for lifting a further plate element to be placed above said plate element, and **in that** a difference in height between an upper part and a lower part of said omega profile (4) correspond to a height of said upright edge (14) of said plate element (3), such that the solar panels of such roof panels lying one above another are oriented such that in use they extend in one plane, while the plate elements of the associated roof panels lying one above another are oriented overlapping relative to each other.

2. The roof panel (1) according to claim 1, **characterized in that** the plate element (3) has an angle on or close to a lower edge so that the plate element extends there at least over a distance in a direction away from the solar panel (2) and/or has an angle on or close to an upper edge (13) so that the plate element extends there at least over a distance in a direction toward the solar panel.

3. The roof panel (1) according to one or more of the foregoing claims, **characterized in that** the roof panel comprises on or close to the upper edge (13) and/or the lower edge quick release coupling means which are configured for quick coupling and optional uncoupling of two roof panels lying one above the other.

4. The roof panel (1) according to claim 3, **characterized in that** the quick release coupling means for mutually coupling the roof panel to a roof panel lying thereunder and/or thereabove form an integral part of the attaching means with which the solar panel (2) and the plate element (3) are attached to each other.

5. The roof panel (1) according to claim 4, **characterized in that** at an end at which a quick release coupling means is situated an attaching means extends beyond the solar panel (2) and optionally the plate element (3).

6. The roof panel (1) according to one or more of the foregoing claims, **characterized in that** the attaching means comprise releasable attaching means so that a roof panel can be arranged in two steps on a roof, i.e. fixing the plate element (3) of the roof panel to the roof and attaching the solar panel (2) to the plate element.

7. The roof panel (1) according to one or more of the foregoing claims, **characterized in that** the solar panel (2) has a length of at least 80 cm, preferably at least 100 cm and/or has a width of at least 50 cm, more preferably 60 cm.

8. A roof (300) provided with a watertight plate element and roof panels (1) according to any of the previous claims.

## Patentansprüche

1. Dachpaneel (1) mit einer wenigstens im Wesentlichen rechteckigen äußeren Form mit einer Längsrichtung und einer Querrichtung, wobei das Dachpaneel ein Solarpaneel (2), ein sich unter und in einem Abstand von dem Solarpaneel erstreckendes wenigstens im Wesentlichen wasserdichtes Plattenelement (3) und Befestigungsmittel, mittels derer das Solarpaneel und das Plattenelement aneinander befestigt oder wenigstens aneinander befestigbar sind, wobei wenigstens in der gegenseitig befestigten Situation sich das Solarpaneel und das Plattenelement parallel zueinander in der Querrichtung erstrecken und sich in der Längsrichtung über einen Abstand von wenigstens 60 cm in einem von 0 verschiedenen Einstellungswinkel relativ zueinander erstrecken,
**dadurch gekennzeichnet, dass**
das genannte Solarpaneel und das genannte Plattenelement mittels eines Omega-Profils (4) aneinander befestigt sind und dass das genannte Plattenelement (3) eine aufrechte Kante (14) zum Anheben eines über dem genannten Plattenelement zu platzierenden weiteren Plattenelements und dass eine Höhendifferenz zwischen einem oberen Teil und einem unteren Teil des genannten Omega-Profils (4) einer Höhe der genannten aufrechten Kante (14) des genannten Plattenelements (3) entspricht, sodass die Solarpaneele von solchen übereinanderliegenden Dachpaneelen derart ausgerichtet sind, dass sich diese in Verwendung in einer Ebene erstrecken, wobei die Plattenelemente der zugeordneten übereinanderliegenden Dachpaneele relativ zueinander überlappend ausgerichtet sind.

2. Dachpanel (1) nach Anspruch 1,
**dadurch gekennzeichnet, dass**
das Plattenelement (3) an einer oder nahe einer unteren Kante einen Winkel aufweist, sodass sich das Plattenelement dort wenigstens über einen Abstand in einer Richtung weg von dem Solarpaneel (2) erstreckt, und/oder an einer oder nahe einer oberen Kante (13) einen Winkel aufweist, sodass sich das Plattenelement dort wenigstens über einen Abstand in einer Richtung zu der Solarpaneel erstreckt.

3. Dachpaneel (1) nach einem oder mehreren der vorangehenden Ansprüche,
**dadurch gekennzeichnet, dass**
das Dachpaneel an der oder nahe der oberen Kante (13) und/oder der unteren Kante Schnellentriegelungskopplungsmittel aufweist, die konfiguriert sind zum schnellen Koppeln und optional zum Entkoppeln von zwei übereinanderliegenden Dachpaneelen.

4. Dachpaneel (1) nach Anspruch 3,
**dadurch gekennzeichnet, dass**
die Schnellentriegelungskopplungsmittel zum gegenseitigen Koppeln des Dachpaneels an ein darunterliegendes und/oder darüberliegendes Dachpaneel einen integralen Teil der Befestigungsmittel bilden, mit denen das Solarpaneel (2) und das Plattenelement (3) aneinander befestigt sind.

5. Dachpaneel (1) nach Anspruch 4,
**dadurch gekennzeichnet, dass**
sich ein Befestigungsmittel an einem Ende, an dem sich ein Schnellentriegelungskopplungsmittel befindet, über das Solarpaneel (2) und optional das Plattenelement (3) hinaus erstreckt.

6. Dachpaneel (1) nach einem oder mehreren der vorangehenden Ansprüche,
**dadurch gekennzeichnet, dass**
die Befestigungsmittel lösbare Befestigungsmittel umfassen, sodass ein Dachpaneel in zwei Schritten auf einem Dach angeordnet werden kann, das heißt Fixieren des Plattenelements (3) des Dachpaneels an dem Dach und Befestigen des Solarpaneels (2) an dem Plattenelement.

7. Dachpaneel (1) nach einem oder mehreren der vorangehenden Ansprüche,
**dadurch gekennzeichnet, dass**
das Solarpaneel (2) eine Länge von wenigstens 80 cm, insbesondere wenigstens 100 cm, aufweist und/oder eine Breite von wenigstens 50 cm, vorzugsweise 60 cm, aufweist.

8. Dach (300) versehen mit einem wasserdichten Plattenelement und Dachpaneelen (1) nach einem der vorherigen Ansprüche.

## Revendications

1. Panneau de toit (1) ayant une forme périphérique au moins essentiellement rectangulaire avec une direction longitudinale et une direction transversale, le panneau de toit comprenant un panneau solaire (2), un élément en plaque (3) au moins essentiellement étanche à l'eau s'étendant sous et à distance du panneau solaire et des moyens de fixation par lesquels le panneau solaire et l'élément en plaque sont fixés ou peuvent au moins être fixés l'un à l'autre, où au moins dans la relation de fixation mutuelle, le panneau solaire et l'élément en plaque s'étendent parallèlement l'un à l'autre dans la direction transversale et s'étendent dans la direction longitudinale sur une distance d'au moins 60 cm selon un angle de réglage différent de 0 degré l'un par rapport à l'autre, **caractérisé en ce que** ledit panneau solaire et ledit élément en plaque sont fixés l'un à l'autre par un profilé en oméga (4), et **en ce que** ledit élément en plaque (3) comprend un bord vertical (14) pour soulever un élément en plaque supplémentaire à placer au-dessus dudit élément en plaque, et **en ce qu'**une différence de hauteur entre une partie supérieure et une partie inférieure dudit profilé en oméga (4) correspond à une hauteur dudit bord vertical (14) dudit élément en plaque (3), de sorte que les panneaux solaires de tels panneaux de toit superposés soient orientés de sorte qu'en cours d'utilisation, ils s'étendent dans un plan, tandis que les éléments en plaque des panneaux de toit associés superposés sont orientés en se chevauchant.

2. Panneau de toit (1) selon la revendication 1, **caractérisé en ce que** l'élément en plaque (3) a un angle sur ou proche d'un bord inférieur de sorte que l'élément en plaque s'étende ici au moins sur une distance dans une direction s'éloignant du panneau solaire (2) et/ou a un angle sur ou proche d'un bord supérieur (13) de sorte que l'élément en plaque s'étende ici au moins sur une distance dans une direction vers le panneau solaire.

3. Panneau de toit (1) selon une ou plusieurs des revendications précédentes, **caractérisé en ce que** le panneau de toit comprend, sur ou proche du bord supérieur (13) et/ou du bord inférieur, des moyens d'accouplement à libération rapide qui sont configurés pour un accouplement rapide et un détachement facultatif de deux panneaux de toit superposés.

4. Panneau de toit (1) selon la revendication 3, **caractérisé en ce que** les moyens d'accouplement à libération rapide pour coupler mutuellement le panneau de toit à un panneau de toit se trouvant en dessous et/ou au-dessus font partie intégrante des moyens de fixation avec lesquels le panneau solaire (2) et l'élément en plaque (3) sont fixés l'un à l'autre.

5. Panneau de toit (1) selon la revendication 4, **caractérisé en ce qu'**au niveau d'une extrémité à laquelle un moyen d'accouplement à libération rapide est situé, un moyen de fixation s'étend au-delà du panneau solaire (2) et facultativement de l'élément en plaque (3).

6. Panneau de toit (1) selon une ou plusieurs des revendications précédentes, **caractérisé en ce que** les moyens de fixation comprennent des moyens de fixation amovibles de sorte qu'un panneau de toit puisse être agencé en deux étapes sur un toit, c'est-à-dire en fixant l'élément en plaque (3) du panneau de toit au toit et en fixant le panneau solaire (2) à l'élément en plaque.

7. Panneau de toit (1) selon une ou plusieurs des revendications précédentes, **caractérisé en ce que** le panneau solaire (2) a une longueur d'au moins 80 cm, de préférence d'au moins 100 cm et/ou a une largeur d'au moins 50 cm, plus préférablement 60 cm.

8. Toit (300) muni d'un élément en plaque étanche à l'eau et de panneaux de toit (1) selon l'une des revendications précédentes.
